# EUROPEAN PATENT SPECIFICATION

(11) **EP 0 805 597 B1**
(45) Date of publication and mention of the grant of the patent: **21.11.2001**
(21) Application number: 96106960.6
(22) Date of filing: 03.05.1996
(51) Int. Cl.: H04N 7/50

(54) **Memory multiplexing system for a high definition video decoder**
Speichermultiplexsystem für einen Videodekoder mit Hochauflösung
Système de multiplexage des mémoires pour un décodeur de vidéo à haute définition

(43) Date of publication of application: 05.11.1997
(73) Proprietor: MATSUSHITA ELECTRIC INDUSTRIAL CO., LTD., Kadoma-shi, Osaka 571-0050 (JP)
(72) Inventor: Phillips, Larry, Collingswood, New Jersey 10810 (US); Davé, Ghanshyam, Marlton, New Jersey 08053-1964 (US)
(74) Representative: Marx, Lothar, Dr.

(56) References cited:
- EP-A- 0 710 033

## Description

### FIELD OF THE INVENTION

The present invention relates to the management of a high-bandwidth memory in a video decoder and in particular to a memory data multiplexing system which significantly reduces the area on the integrated circuit that is used to transfer data between the decoding processor and the high-bandwith memory.

### BACKGROUND OF THE INVENTION

In the United States, a standard has been proposed for digitally encoded high definition television (HDTV) signals. This standard is essentially the same as the MPEG-2 standard, proposed by the moving pictures expert group (MPEG) of the international organization for standardization (ISO). The standard is described in a international standard (IS) publication entitled, "Information Technology - Generic Coding of Moving Pictures and Associated Audio, Recommendation H.626", ISO/IEC 13818-2, IS, 11/94 which is available from the ISO and which is hereby incorporated by reference for its teaching on the MPEG-2 digital video coding standard.

Television signals encoded according to the proposed HDTV standard will be transmitted using an RF signal which fits within the 6 MHz bandwith of a conventional television channel. A video image encoded according to this standard may, however, have a data rate as high as 94 million pixels per second. Due to the relatively small bandwidth of the transmission channel, and the relatively high data rate of the reproduced image, the transmitted signal is subject to considerable compression. Thus, the received signal is subject to considerable processing which recovers the high data rate video signal from the compressed transmitted data. Both the format of the compressed and uncompressed data, and the processing steps used to decompress the data are defined by the above-referenced MPEG standard.

As described in EP 0 710 033 A2 entitled MPEG VIDEO DECODER HAVING HIGH-BANDWIDTH MEMORY, it is desirable to store the input bit stream, the reference images used for motion compensated processing, and the image which is to be displayed in a memory which is separate from the processing circuitry which decodes the input bit-stream. In order to process all of the requests from the different parts of the decoder quickly enough to produce a decoded image in real-time, however, it is desirable for the memory to have a relatively high-bandwidth.

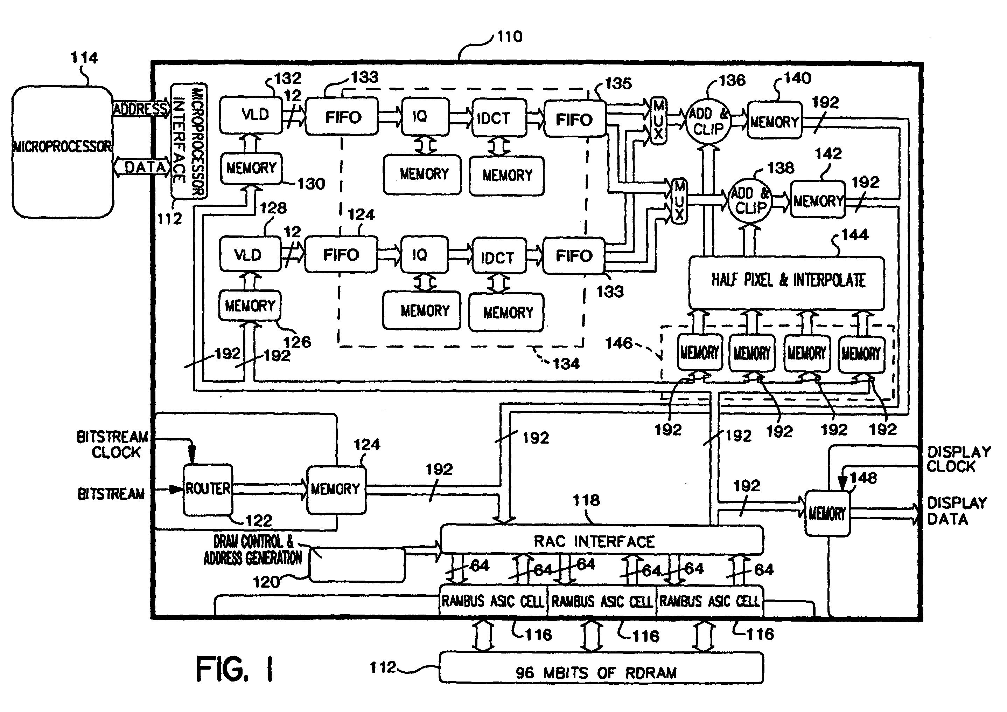

A system which employs a high-bandwidth memory is disclosed in the above-referenced patent application. A system of this type is shown in Figure 1. This system includes three major components, a processor 110, which contains all of the circuitry needed to decode an MPEG encoded video signal; a control microprocessor 114, which is used to initialize the integrated circuit 110 and to set the operational mode of the decoder, and a central memory 112, which holds the MPEG bit stream as it is received, the reference images used for motion compensated decoding, and the image which is to be displayed. The memory 112 used in the system shown in Figure 1 as well as in the exemplary embodiment of the invention is a RAMBUS memory system, available from NEC and Toshiba, which is described in a specification document entitled RDRAM Reference Manual that is hereby incorporated by reference. The exemplary systems use 96 Mbits of memory, arranged as three 32 Mbit arrays, each array providing 64-bit data words.

Briefly, the system shown in Figure 1 operates as follows. An MPEG-2 encoded bit-stream is applied to router 122 which divides the bit stream into two portions. These portions are processed by respective variable length decoders 128 and 132. The bit stream is stored into a buffer memory 124 as it is received and, when a sufficient number of bits have been stored, is transferred into the memory 112 via the RAMBUS ASIC cell (RAC) interface 118 and the RACs 116. As shown in Figure 1, the input to the RAC interface circuitry 118 is a bus having a bit width of 192 bits.

Data is also retrieved from the memory 112 via the RACs 116 and RAC interface 118 and distributed to the VLD processors 128 and 132, half-pixel interpolation circuitry 144, and a display memory 148. In the exemplary system shown in Figure 1, the data retrieved from the memory 112 is transferred around the circuit 110 using a 192-bit bus.

Because the various processors cannot handle the data provided by the 192-bit bus at the rate at which it is received, each subprocessor includes a buffer memory, for example the memories 130 and 126, coupled to the VLD processors 132 and 128 respectively. Each of these memories has dedicated address decoding logic. These memories are coupled to receive data from the 192-bit bus and to provide that data to the respective subprocessors as it is needed.

In the exemplary system shown in Figure 1, bit-stream data from the memory 112 is transferred to the memories 126 and 130. It is extracted from these memories by the respective VLD processors 128 and 132. The VLD processors convert the variable length coded data into fixed-length coded data which is provided to the inverse quantization and inverse discrete cosine transform processing circuitry 134. Data is transferred from the VLDs 128 and 132 to the processor 134 via respective first-in-first-out memories (FIFOs) 129 and 133 respectively.

The data provided by the processor 134 is in the form of macroblocks of pixel data or of differential pixel data. This data is provided by the processor 134 to the FIFO memories 133 and 135 for processing by the adders 136 and 138 under control of the half-pixel interpolation circuitry 144.

The circuitry 144 controls the processing of the data received from the processor 134 in two ways. It allows data representing pixel values to pass unaltered and it combines the data representing differential pixel values with pixel data derived from reference memory data. The reference memory data is provided to the circuitry 144 via the memories 146. As shown in Figure 1, each of the memories 146 receives data from the memories 112 via the RAC interface circuitry 118. This data is then provided from the memories 146 to the half-pixel interpolation circuitry 144 via an 8-bit bus.

The circuitry 144 generates reference blocks of pixels from the data provided by the memories 146 and combines these reference blocks with blocks provided by the circuitry 134 via the FIFOs 133 and 135. The reference data is added to the data provided by the processor 134 one pixel at a time in the add-and-clip circuits 136 and 138. The output pixel values provided by the circuits 136 and 138 are applied to respective memories 140 and 142. Each of these memories receives pixels values 8-bits at a time and consolidates these values to provide 192 bits of data at a time for storage into the memory 112 via the RAC interface 118.

The data provided by the memories 140 and 142 represents the decoded image data. This data is stored into the memory 112 to be used as reference image data for the half-pixel interpolation circuitry 144 or to be applied to the memory 148 for display.

In the circuit described above, data from the high-bandwidth memory 112 is transferred to the components of the processor 110 using a wide (i.e. 192 bit) bus. This bus forms a connection between the RAC interface circuitry 118 and each of a plurality of memories which are configured around the circuit. This configuration is disadvantageous because the 192 bit bus being routed around the circuit requires a relatively large amount of chip area.

### SUMMARY OF THE INVENTION

The present invention is embodied in a video decoder in which a high-bandwidth memory is coupled to a plurality of latch-multiplexers, each of which converts the high-bandwidth data stream into a plurality of lower bandwidth data streams. Each of the latch-multiplexers includes a latch which accepts a relatively large amount of data from the high-bandwidth memory and a multiplexer which sequences through the data held by the latch to provide the data to various subprocessing units of the decoder via a plurality of lower bandwidth data paths. The multiplexing operation occurs while the high-bandwidth memory is providing data to other ones of the latch-multiplexer circuits. The latch-multiplexers are operated in sequence such that the latch-multiplexers which serve higher bandwidth data channels are loaded more frequently than the latch-multiplexers which serve lower bandwidth data channels.

### BRIEF DESCRIPTION OF THE DRAWINGS

Figure 1 (prior art) is a block diagram of an exemplary high-definition video decoder which employs a high-bandwidth memory.

Figure 2 is a block diagram of a high-bandwidth video decoder which includes an embodiment of the present invention.

Figure 3 is a block diagram of the RAC input memories and latch-multiplexers of the circuitry shown in Figure 2.

Figures 4A and 4B are block diagrams which illustrate the structure of one of the multiplexers shown in Figure 3.

Figure 5 is a block diagram which illustrates the structure of the RAC output memory interface shown in Figure 2.

### DETAILED DESCRIPTION

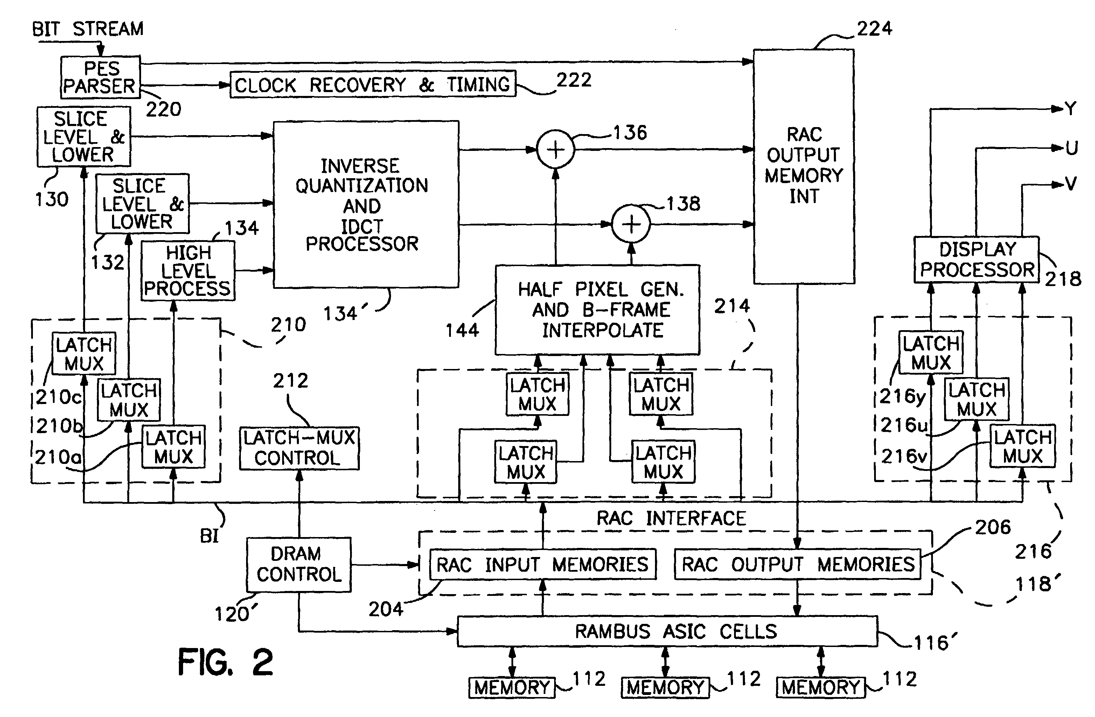

The circuitry shown in Figure 2 operates as follows. Data held in the central memory 112 is provided via RAMBUS ASIC cells (RAC) 116 and RAC interface 118 to RAC input memories 204 and is provided from RAC output memories 206 to the memory 112, also via the RAC interface 118 and RAC 116. The structure and function of the RAC interface 118, RAC 116 and central memory 112 are described in the above-referenced patent application EP 0 710 033 A2. In the materials that follow, data transfer between the RAC interface 118 and the memory 112 is assumed to operate in the manner described in the referenced patent application and so, is not described in detail.

The memories 204 and 206 consolidate the buffering memory used by various processing units in the decoder in a single location. This memory allows the circuit to use less distributed memory around the integrated circuit and thus affords a more economical overall circuit configuration. The consolidation of the 192-bit bus to the input ports of the latch multiplexers also reduces the portion of the integrated circuit which is used by the bus.

Data from the RAC input memories 204 is provided to latch-multiplexers 210, 214 and 216. Data is provided to the RAC output memories 206 via the RAC output memory interface 224. Data is transferred between the RAMBUS memories 112 and the RAC interface 118 under control of the DRAM control circuitry 120'. Each of the latch-multiplexers 210, 214 and 216 converts the 192-bit parallel data stream into a smaller data stream. For example, the latch-multiplexers 210a, 210b and 210c each convert the 192-bit data stream into a respective 32-bit data stream for one of the VLD processors 134, 132 and 130, respectively. The transfer of data between the RAC input memories 204 and the latch-multiplexers 210, 214 and 216 and between the RAC output memory interface 224 and the RAC output memories 206 is controlled by latch-mulitplexer control circuitry 212. For the sake of clarity, the connections among the circuitry 212, the latch-multiplexers 210, 214 and 216 and the RAC output memory interface 224 is not shown in Figure 2.

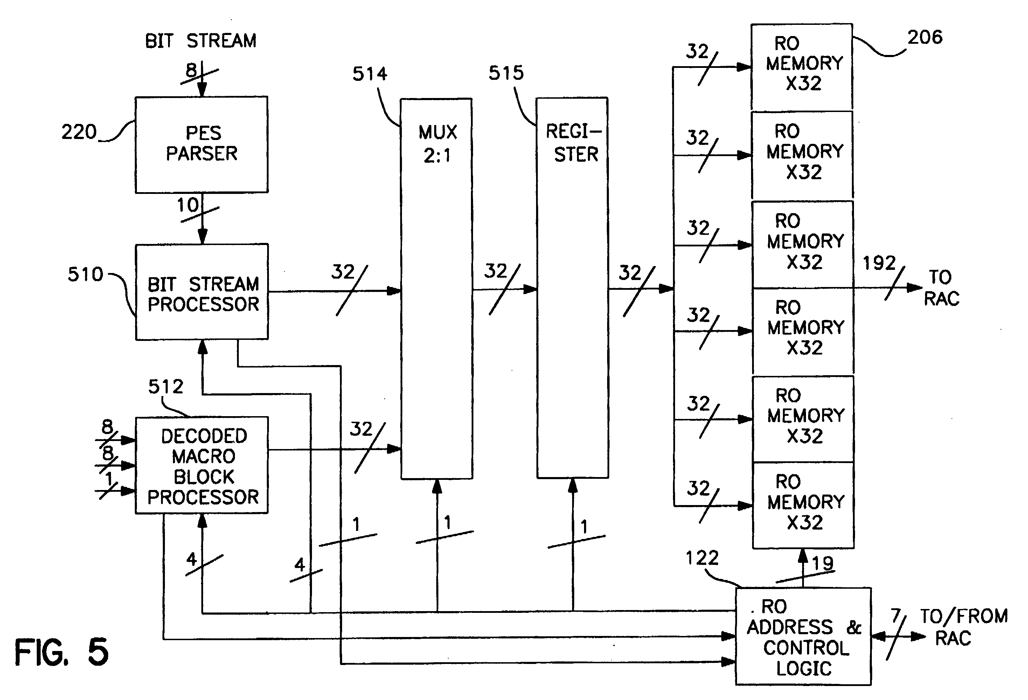

In the system shown in Figure 2, the MPEG-2 encoded bit-stream is applied as program elementary stream (PES) packets to a PES parser 220. The parser 220 extracts the bit-stream data from the PES packets and provides it to the RAC output memory interface 224. The RAC output memory interface 224 is described below with reference to Figure 5. The PES parser 220 also extracts timing information from the PES packets and provides this information to clock recovery and timing circuitry 222. This circuitry may include, for example, a digital phase locked loop (not shown) which generates all of the internal clock signals used by the circuitry shown in Figure 2.

The bit-stream data is written into the RAC output memories 206 by the RAC output memory interface 224. Because the circuit shown in Figure 2 uses three VLD processors, the bit-stream is split into three partitions. One of these partitions contains only high-level structures, such as sequence headers, group of picture headers, and picture headers. The other two partitions contain slice records. Alternate slice records of the MPEG-2 encoded bit-stream are placed in respective alternate ones of the other two partitions.

When bit-stream data is read from these three partitions, it is provided to the respective latch-multiplexers 210a, 210b and 210c. Latch-multiplexer 210a provides data from the first partition to the high-level process VLD processor 134 while latch-multiplexers 210b and 210c provide data from the second and third partitions to respective slice and lower level VLD decoders 132 and 130, respectively. The VLD processors 130, 132 and 134 convert the variable-length coded bit-stream into fixed-length codes which are then applied to inverse quantization and IDCT processor 134'. The processor 134' provides the same functionality as the processor 134 described above with reference to Figure 1.

The data provided by the processor 134' is in the form of blocks of pixel data or differential pixel data. The differential pixel data are applied to the summing circuits 136 and 138 where they are combined with corresponding pixel data from reference images, as provided by the half-pixel interpolation circuitry 144. This circuitry may be identical to the circuitry 144 described above with reference to Figure 1.

The circuitry 144 receives reference image pixel data from RAC input memories 204 and latch-multiplexers 214. Each of the latch-multiplexers 214a, 214b, 214c and 214d receives reference image data 192-bits at a time and provides the data to the circuitry 144 eight-bits at a time.

The summing circuits 136 and 138 provide the decoded pixel data to the RAC output memory interface 224 which, in turn, stores the decoded image data into the RAC output memories 206. This decoded image data is used as reference image data for decoding motion-compensated encoded differential pixel values and for the output image which is to be displayed.

The data for the display image is provided from the RAC input memories to the latch-multiplexers 216. The latch-multiplexers 216Y, 216U and 216V, each receives data 192-bits at a time and provides a respectively different component signal of the image (i.e. Y, U and V) to the display processor 218 as an eight-bit data stream. The processor 218 provides the Y, U and V signals to a display device (not shown) to reproduce the decoded image.

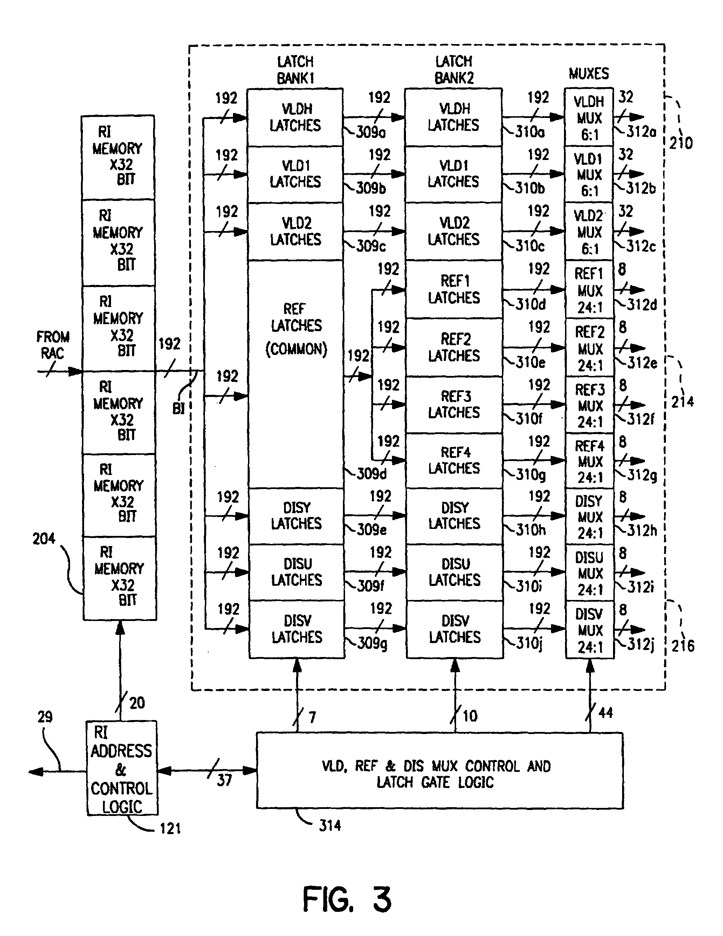

Figure 3 is a block diagram which shows a portion of the decoder of Figure 2 in greater detail. Although, in Figure 2, the latch-multiplexers 210, 214 and 216 are shown as being distributed around the system, these devices are contiguous in the exemplary embodiment of the invention, as shown in Figure 3. This implementation is advantageous because it reduces the length of the 192-bit bus and, thus, the area on the integrated circuit which it occupies.

As shown in Figure 3, the RAC input memories 204 are made up of six 32-bit by 320 word memories. The RAC input address and control logic 121 provides 20 bits of control data to the memories 204. This includes 9 write address bits and 9 read address bits which are applied in parallel to all of the six memories, a clock signal and a write-enable signal. The memories 204 are coupled to the 192-bit system bus to receive data from the RAC interface 118. The address and control logic 121 also uses a 29-bit bidirectional bus to communicate with the RAC interface 118. This bus is bidirectional to allow the circuitry 121 to coordinate memory read operations with the RAC interface 118. The RAC interface 118 sends data to the circuitry 121 and to the memory 204 to indicate the type of data being provided. The circuitry 121 sends data on the status of the memory 204 to the RAC interface 118. The circuitry 121 also keeps track of which memory locations in the memory 204 are available for holding data and which have data that is to be provided to the latch multiplexer circuits.

Data provided by the RAC input memories 204 is routed to one of seven 192 bit latches, 309a through 309g in latch bank 1. The latches 309a through 309g are coupled to receive the data provided by the-memories 204 via a common 192-bit bus. Each latch is enabled to store the data appearing on the bus in response to a respective enable signal provided by the VLD, reference and display multiplexer control and latch gate logic circuitry 314. The logic circuitry 314 provides 7 enable signals, one for each of the latches 309a through 309g.

Responsive to one of these enable signals, a respective one of the latches 309a through 309g stores the 192 bits of data which are currently being transferred via the bus BI. As described below, data is transferred from the memories 204 to the latch-multiplexers 210, 214 and 216 at varying rates, depending on how the data is used by the decoder.

Data in the latches 309a, 309b, 309c, 309e, 309f and 309g in latch bank 1 is provided to respective latches 310a, 310b, 310c, 310h, 301i and 310j of latch bank 2. Data in latches 309d, however, is provided to a selected one of four latches 310d, 310e, 310f and 310g of latch bank 2. Latch 309d in bank 1 is configured to serve four latches in bank 2 in order to reduce the amount of circuitry used by latch bank 1. This is possible, in part, because rate at which the reference image data is provided is low relative to the rate at which bit-stream data is provided to the VLD processors.

The latches 310a through 310J provide 192 bits of data to respective latch multiplexers 312a through 312j. The multiplexers select portions of the data provided by the latches to be applied to respective processing circuits in the MPEG-2 decoder circuit shown in Figure 2. For example, the multiplexer 312a divides the 192 bits of data held by latch 310a into 32-bit segments which are then provided to the VLD level process circuitry 134, shown in Figure 2. The multiplexers 312a, 312b and 312c each access 192 bits of data held by a respective one of the latches 310a, 310b and 310c and provide 32-bits of data to a respective one of the VLD processors 134, 132 and 130.

The multiplexers 312d through 312j each access 192 bits of data, held by a respective one of the latches 310d through 310j, partition that data into eight-bit segments and provide the data eight-bits at a time to elements of the decoder shown in Figure 2. The multiplexers 312d through 312g provide reference image data to the half-pixel interpolation circuitry 144 while the multiplexers 312h through 312j provide data to the display processor 218. The logic circuitry 314 provides 44 bits of control data to the multiplexers 312a through 312j to control their operation. This control data includes three select bits for each of the multiplexers 312a through 312c and five select bits for each of the multiplexers 312d through 312j. The logic circuitry 314 is connected to a 37-bit control bus to exchange control signals with the RAC input address and control logic 121.

Although the number of latches in bank 1 and bank 2 is different, the two banks of latches provide a double buffering scheme which ensures that the appropriate latch in bank 1 is available to receive a particular type of data from the memory 204 even while data of that type is being transferred from a latch in bank 2 to the appropriate processing circuitry by one of the multiplexers 312.

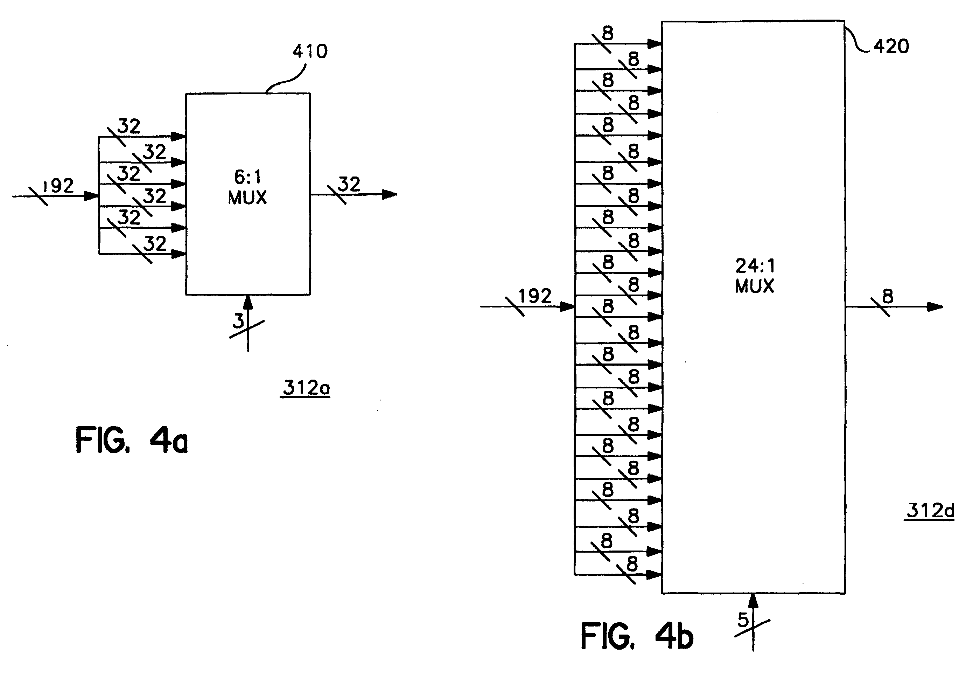

Figures 4a and 4b illustrate the structure of the two types of multiplexer which are used in the circuitry shown in Figure 3. Figure 4a shows an exemplary 192-bit to 32-bit multiplexer suitable for use as one of the multiplexers 312a through 312c. Figure 4b shows an exemplary 192-bit to 8-bit multiplexer suitable for use as one of the multiplexers 312d through 312j.

The multiplexer 312a, shown in Figure 4a, includes a 6-to-1 multiplexer 410, which receives a 3-bit control signal from the logic circuitry 314 (shown in Figure 3) and, based on the value of the control signal, provides one of the six 32-bit segments of the 192-bit word held in the corresponding one of the registers 310a through 310c.

Multiplexer 312d, shown in Figure 4b, operates in substantially the same way, except that the multiplexer 420 is a 24-to-1 multiplexer which provides the 192-bit input value as one of twenty-four 8-bit values in response to a five-bit control signal from logic circuitry 314.

As described above, the 32-bit values provided by the multiplexer 312a are MPEG-2 encoded bit-stream data which are applied to the high-level process VLD processor 134. The 8-bit values provided by the multiplexer 312d are reference pixel data values which are applied to the half-pixel interpolation circuit 144.

Figure 5 is a block diagram of circuitry suitable for use as the RAC output memory interface 224, shown in Figure 2. This circuit receives eight-bit values representing successive bytes of an MPEG-2 transport stream from a transport decoder (not shown). These values form successive program elementary stream (PES) packets which are decoded by the PES packet parser 220. The output signal provided by the parser 220 is a bit-serial MPEG-2 encoded bit-stream. The bit-stream is applied to a bit-stream processor 510 which collects the bit-stream in 32-bit segments and passes the segments to a 2-to-1 multiplexer 514 and then to a register 515. The register, in turn is coupled to provide 32-bit values to the RAC output memory 206. The multiplexer 514, register 515 and memory 206 are controlled by RAC output address and control logic 122.

The multiplexer 514 also receives input data from a macroblock processor 512. The processor 512 receives the two 8-bit values provided by the summing circuits 136 and 138, shown in Figure 2, combines successive pixel values from each summing circuit into 32-bit words and provides the 32-bit words to the multiplexer 514 and then to the register 515.

The combination of the multiplexer 514, register 515, memory 206 and control logic 122 is a data formatter which combines the 32-bit data values provided by the processors 510 and 512 into respective 192-bit words held in the memory 206.

In the exemplary embodiment of the invention, the processors 510 and 512 include internal registers (not shown) which buffer several 32-bit words that are applied in succession by the multiplexer 514 and register 512 to successive 32-bit memory locations in the distinct 192-bit words of the memory 206. Thus, one 192-bit word of the memory 206 will contain all bit-stream data while another 192-bit word will contain all decoded pixel data.

Alternatively, the memory 206 may be controlled, as described below, to selectively apply the 32-bit data value held in the register 515 to any 32-bit sub-word of the memory 206. Using this scheme, the memory in the processors 510 and 512 that is used to buffer the data may be eliminated. Each of the processors 510 and 512 provides 32-bit values to the multiplexer 514 as they are produced and the control logic 122 directs the 32-bit value to the proper sub-word of the memory 206 to format the 192-bit words consistently.

Register 515 stores a 32-bit word from either the input-bit stream or from the macroblock processor 512. This value represents either 32-bits of bit-stream data or 32 bits of pixel data. The register 515 provides the 32-bit value to the RAC output memory 206. The memory 206 includes six 32-bit by thirty-six word memories which are used to buffer the data provided by the register 515 before it is applied to the RAC interface 118, shown in Figure 2. All of the six memories receive the same address value, however, each memory receives a separate write enable (WE) signal. Thus the 32-bit value provided by the register 515 may be written into any segment (sub-word) of any of the memories 206 by applying the desired address value to all of the memories and then activating the WE signal only for the selected memory.

The RAC output memory interface circuit 224 receives five-bits of control information from the RAC interface 118. This control information specifies which type of data, bit-stream or macroblock, is to be stored in the register 515 and when a 192-bit value from the memory 206 is to be transferred to the RAC interface 118. This control signal is applied to RAC output control and logic circuitry 122 which generates the appropriate control signals for the other circuitry shown in Figure 5. These signals include a 19-bit control signal for the memories 206 (six read address bits, six write address bits, a one-bit clock signal and a six WE signals). The logic circuitry 122 also generates two control bits, one for the multiplexer 514 and one for the register 515. These control signals allow either the decoded pixel data or the bit-stream data to be written into the appropriate address of the appropriate memory 206. In addition, the circuitry 122 provides a four-bit control value to the bit-stream processor 510 and a four-bit control signal to the macroblock processor 512. The circuitry 122 also receives two hand-shake signals, one each from the bit-stream processor and the decoded macroblock processor. These signals indicate that the respective processors have data to transfer through the multiplexer 514 to the register 515.

The four-bit signal applied to the processor 510 allows the processor to collect four 8-bit segments of the input bit-stream into a single 32-bit value. The processor 510 includes an internal shift-register (not shown) which holds successive 8-bit segments of the input bit-stream as provided by the PES parser 220. The four-bit control signal for the macroblock processor 512 includes three-bits that specify which portion of the internal shift register is to provide data to the multiplexer 525 and register 515, and one-bit which selects the decoded macroblock.

The system described above transfers 192-bit values from the RAC input memories 204 to the various latch-multiplexer circuits 210, 214 and 216 and accepts data, at the RAC output memories 206, from the RAC output memory interface 224. The data provided by the latch-multiplexers is provided as smaller data words (i.e. 8-bit or 32-bit values) to the various processing elements and the data received from the RAC output memory interface is generated as eight-bit values representing either the input bit-stream or a processed image. These eight-bit values are aggregated to supply respective 32-bit values to the RAC output memories 206. This configuration can be used advantageously in an MPEG-2 decoder because the maximum rates at which data are provided to the various processes can be predicted and accommodated.

The Tables below show an exemplary worst-case schedule for reading data from the memories 204 which allows the decoder shown in Figure 2 to decode an MPEG-2 image in the main-profile high-level format: Each number in the Tables 1 and 3 represents a single system clock cycle at which 192 bits of data are transferred from the memory 204 to one of the latches 309a through 309c and 309e through 309g, as indicated by the first column of the table. The numbers in Table 2 represent clock pulses at which the type of data in the first column is to be transferred to latch 309d for further transfer to the latch in latch bank 2 which is indicated by the four column headings.

**TABLE 1**

| | | | | | | | | | |
|---|---|---|---|---|---|---|---|---|---|
| DISY | 1 | 25 | 49 | 73 | 97 | 121 | 145 | 169 | 193 |
| DISU | 2 | 17 | 65 | | 113 | | 161 | | 209 |
| DISV | 3 | 18 | 66 | | 114 | | 162 | | 210 |

**TABLE 2**

| DATA | REF1 | REF2 | REF3 | REF4 |
|---|---|---|---|---|
| U0 | 4 | 5 | 6 | 7 |
| U1 | 13 | 14 | 15 | 16 |
| U2 | 22 | 23 | 24 | 25 |
| U3 | 31 | 32 | 33 | 34 |
| U4 | 40 | 41 | 42 | 43 |
| V0 | 49 | 50 | 51 | 52 |
| V1 | 58 | 59 | 60 | 61 |
| V2 | 67 | 68 | 69 | 70 |
| V3 | 76 | 77 | 78 | 79 |
| V4 | 85 | 86 | 87 | 88 |
| Y0 | 94 | 95 | 96 | 97 |
| Y1 | 111 | 112 | 113 | 114 |
| Y2 | 128 | 129 | 130 | 131 |
| Y3 | 145 | 146 | 147 | 148 |
| Y4 | 162 | 163 | 164 | 165 |
| Y5 | 179 | 180 | 181 | 182 |
| Y6 | 196 | 197 | 198 | 199 |
| Y7 | 213 | 214 | 215 | 216 |
| Y8 | 230 | 231 | 232 | 233 |
| U0 | 247 | 248 | 249 | 250 |

**TABLE 3**

| | | | | | | | | |
|---|---|---|---|---|---|---|---|---|
| VLDX | 8 | 14 | 20 | 26 | 32 | 38 | 44 | 50 |

Although these Tables may appear to show a fixed schedule, there is no fixed time for accessing any particular type of data from the memory 204. The control logic 314 and the RAC input control logic 121, instead monitor the status of the latches in latch bank 1 and attempt to keep these latches full. Thus, as soon as one of these latches transfers its contents to latch bank 2, the control logic 121 and 314 attempts to fill the empty latch with data from the memory 204. In transferring data from the memory 204 to the latches 309a through 309g, display data has the highest priority, followed by reference data and then VLD data.

The sequencing shown in the Table represents a worst-case timing for the decoder shown in Figure 2 to decode an MPEG-2 image encoded according to the main-profile, high-level format. Typically, the greater number of memory read operations which send data to the VLD processors will send that data to the slice and lower level processors, 130 and 132. The VLD operations listed in the table send data, as needed, to one of the three processors 130, 132 and 134.

Data is written into the RAC output memory 206 without regard to how or when data is read from the RAC input memory 204 because the memory 206 is separate and distinct from the memory 204. Data transfers between the memories 204 and 206 on the one hand and the system memories 112 on the other hand are controlled by the RAC interface 118. This interface is described in the above-referenced patent application.

When a particular bit-stream is decoded, not all of the read and write operations will be performed with the indicated timing. If a read operation is not needed because a processor does not need the data or if a write operation is not needed because data is not available to be written, it is simply skipped. Thus the timing shown in the Table represents time slots which are available for the specified operations in the worst-case timing situation.

While the invention has been described in terms of an exemplary embodiment, it is contemplated that it may be practiced as outlined above within the scope of the following claims.

## Claims

1. A high-bandwidth memory system comprising:
a memory (112) which holds data as M-bit data values, where M is an integer;
a plurality of latch-multiplexers (210, 214, 216), each of the latch-multiplexers including:
a latch (309, 310) which accepts the M-bit data values provided by the memory (112); and
a multiplexer (312) which sequences through the M-bit data value held by the latch (310) to provide the data at least N-bits at a time at an output port, where N is an integer less than M;
wherein, the plurality of latch-multiplexers include first latch-multiplexers (309d-g, 310d-j, 312d-j) which serve relatively low-bandwidth channels and second-latch multiplexers (309, 310, 312a-c) which serve relatively high-bandwidth channels, such that the second latch-multiplexers (309, 310, 312a-c) are loaded with data from the memory (112) more frequently than the first latch-multiplexers (309d-g, 310d-j, 312d-j).

2. A high-bandwidth memory system according to claim 1, wherein:
M is evenly divisible by N; and
the second latch-multiplexers (309, 310, 312a-c) sequence the M-bit data value held by their respective latches to provide the data at least P-bits at a time at their respective output ports, where P is an integer less than M and greater than N, such that M is evenly divisible by P; and
the high-bandwidth memory system further includes sequencing means (314), coupled to the memory and to the first and second latch-multiplexers for causing the central memory to sequentially provide data to each of the first and second latch-multiplexers at respective rates, wherein the rate at which data is provided to one of the second latch-multiplexers is greater than the rate at which data is provided to any of the first latch-multiplexers.

3. A high-bandwidth memory system according to claim 2, further including:
a terminal for receiving R-bit data values, where R is an integer less than M, where M is evenly divisible by R;
formatting means for combining a sequence of the received R-bit values into an M-bit value;
a further latch for storing the M-bit value produced by the formatting means and for providing the stored M-bit value to a further memory; and
means for storing the M-bit value held by the further latch to the further memory;
wherein the sequencing means includes means for causing the further memory to store data provided by the further latch as it is provided by the formatting means for combining.

4. A high-bandwidth memory system according to claim 3, wherein:
the memory is a first buffer memory coupled to a central memory for holding successive M-bit values provided by the central memory and for providing the held M-bit values, to the first and second latch-multiplexers; and
wherein the sequencing means is coupled to the first and buffer memory to dynamically change respective rates at which the M-bit values are provided to the first and second latch-multiplexers in response to respective rates at which the M-bit values are consumed by the respective low-bandwidth and high-bandwidth channels.

5. A memory system comprising:
first and second memories (112, 204) each of which holds data as M-bit data values, where M is an integer;
an output latch (310), coupled to receive M-bit data values from the first memory for storing the M-bit data values;
first output multiplexing means (312d-j), coupled to the output latch for providing the data in the M-bit data values as a sequence of N-bit data values, where N is an integer less than M;
second output multiplexing means (312d-j), coupled to the output latch for providing the data in the M-bit data values as a sequence of P-bit data values, where P is an integer less than M;
input formatting means, coupled to receive respective Q-bit data values and R-bit data values, where Q and R are integers less than M, and responsive to a control signal for selectively combining ones of the Q-bit data values to generate an M-bit data value or to combine ones of the R-bit data values to generate an M-bit data value;
memory control means, coupled to the first memory, for reading the M-bit data values from the first memory and for storing the M-bit data values generated by the input formatting means into the second memory; and
control means, coupled to the memory control means, to the first and second output multiplexing means and to the input formatting means for generating the control signals to cause a central memory to fetch or store an M-bit value and to cause the first memory to accept the fetched data value and to cause the second memory to provide the data value which is stored.

6. A memory system according to claim 5, wherein:
the first memory is a buffer memory coupled to the central memory for receiving successive M-bit values provided by the central memory and for providing the held M-bit values to the output latch; and
the memory control means is coupled to the first and second memories and the control means generates control signals which dynamically change respective rates at which the M-bit values are provided by the first memory to the first and second output multiplexing means in response to respective rates at which the first and second to the output multiplexing means provide the respective N-bit data values and P-bit data values.

## Patentansprüche

1. Speichersystem mit großer Bandbreite mit:
einem Speicher (112), welcher Daten als M-Bit Daten-Wert speichert, wobei M eine ganze Zahl ist;
einer Mehrzahl von Latch-Multiplexern (210, 214, 216), wobei jeder der Latch-Multiplexer umfasst:
ein Latch (309, 310), welches die M-Bit Daten-Werte empfängt, welche von dem Speicher (112) zur Verfügung gestellt werden; und
einen Multiplexer (312), welcher durch den M-Bit Daten-Wert durchläuft bzw. sequentiell abarbeitet, welcher von dem Latch (310) gespeichert wird, um die Daten bei einem Ausgabeanschluss mit mindestens N-Bit zu einem Zeitpunkt zur Verfügung zu stellen, wobei N eine ganze Zahl kleiner als M ist;
wobei die Mehrzahl der Latch-Multiplexer erste Latch-Multiplexer (309d-g, 310d-j, 312d-j) umfasst, welche Kanäle mit relativ niedriger Bandbreite bedienen bzw. ansteuern und zweite Latch-Mutliplexer (309, 310, 312a-c) umfasst, welche Kanäle mit relativ großer Bandbreite bedienen, so dass die zweiten Latch-Multiplexer (309, 310, 312a-c) mit Daten von dem Speicher (112) öfter geladen werden als die ersten Latch-Multiplexer (309d-g, 310d-j, 312d-j).

2. Speichersystem mit großer Bandbreite nach Anspruch 1, wobei:
M ohne Rest teilbar ist durch N, und
die zweite Latch-Multiplexer (309, 310, 312a-c) den M-Bit Daten-Wert durchlaufen bzw. sequentiell abarbeiten, welcher von ihren jeweiligen Latches gespeichert wird, um die Daten bei ihren jeweiligen Ausgabeanschlüssen zur Verfügung zu stellen mit mindestens P-Bits zu einem Zeitpunkt, wobei P eine ganze Zahl kleiner als M und größer als N ist, so dass M ohne Rest durch P teilbar ist; und
das Speichersystem mit großer Bandbreite weiter eine Sequenzvorrichtung (314) umfasst, welche mit dem Speicher und mit den ersten und zweiten Latch-Multiplexern gekoppelt ist zum Bewirken, dass der zentrale Speicher sequenziell Daten für jeden der ersten und zweiten Latch-Multiplexer bei jeweiligen Raten zur Verfügung stellt, wobei die Rate mit welcher Daten für einen der zweiten Latch-Multiplexer zur Verfügung gestellt werden größer ist als die Rate mit welcher Daten jedem der ersten Latch-Multiplexer zur Verfügung gestellt werden.

3. Speichersystem mit großer Bandbreite nach Anspruch 2, weiter umfassend:
einen Anschluss zum Empfangen von R-Bit Daten-Werten, wobei R eine ganze Zahl kleiner als M ist, wobei M ohne Rest durch R teilbar ist;
eine Formatierungs-Vorrichtung zum Kombinieren einer Sequenz der empfangenen R-Bit Werte in einen M-Bit Wert;
ein weiteres Latch zum Speichern des M-Bit Wertes, welcher erzeugt wird durch die Formatierungs-Vorrichtung und zum Liefern des gespeicherten M-Bit Wertes an einem weiteren Speicher; und
eine Vorrichtung zum Speichern des M-Bit Wertes, welcher von dem weiteren Latch gespeichert wird, in dem weiteren Speicher;
wobei die Sequenz-Vorrichtung eine Vorrichtung umfasst, welche den weiteren Speicher veranlasst, die Daten zu Speichern, welche von dem weiteren Latch zur Verfügung gestellt werden, wenn bzw. wie diese von der Formatierungs-Vorrichtung zum Kombinieren zur Verfügung gestellt werden.

4. Speichersystem mit großer Bandbreite nach Anspruch 3, wobei:
der Speicher ein erster Puffer-Speicher ist, welcher mit einem zentralen Speicher gekoppelt ist, zum Speichern von aufeinanderfolgenden M-Bit Werten, welche von dem zentralen Speicher zur Verfügung gestellt werden und zum Liefern der gespeicherten M-Bit Werte an die ersten und zweiten Latch-Multiplexer; und
wobei die Sequenz-Vorrichtung mit dem ersten und Puffer-Speicher gekoppelt ist, um dynamisch jeweils Raten zu verändern, mit welchen die M-Bit Werte bei den ersten und zweiten Latch-Multiplexern zur Verfügung gestellt werden, in Abhängigkeit von den jeweiligen Raten, mit welchen die M-Bit Werte von den jeweiligen Kanälen mit niedriger Bandbreite und hoher Bandbreite aufgenommen werden.

5. Speichersystem mit:
ersten und zweiten Speichern (112, 204), wobei jeder davon Daten als M-Bit Daten-Werte speichert, wobei M eine ganze Zahl ist;
einem Ausgabe-Latch (310), welches gekoppelt bzw. verschaltet ist, um M-Bit Daten-Werte von dem ersten Speicher zu empfangen zum Speichern der M-Bit Daten-Werte;
einer ersten Multiplex-Ausgabevorrichtung (312d-j), welche mit dem Ausgabe-Latch gekoppelt bzw. verschaltet ist zum Liefern der Daten in den M-Bit Daten-Werten als eine Sequenz von N-Bit Daten-Werten, wobei N eine ganze Zahl kleiner als M ist;
einer zweiten Multiplex-Ausgabevorrichtung (312d-j), welche mit dem Ausgabe-Latch gekoppelt bzw. verschaltet ist zum Liefern der Daten in den M-Bit Daten-Werten als eine Sequenz von P-Bit Daten-Werten, wobei P eine ganze Zahl kleiner als M ist;
einer Eingabe-Formatierungs-Vorrichtung, welche gekoppelt bzw. verschaltet ist, um jeweils Q-Bit Daten-Werte und R-Bit Daten-Werte zu empfangen, wobei Q und R ganze Zahlen kleiner als M sind, und welche reagiert auf ein Steuersignal zum selektiven Kombinieren von welchen der Q-Bit Daten-Werte um einen M-Bit Daten-Wert zu erzeugen, oder um welche von den R-Bit Daten-Werten zu kombinieren, um einen M-Bit Daten-Wert zu erzeugen;
einer Speichersteuervorrichtung, welche mit dem ersten Speicher gekoppelt bzw. verschaltet ist, zum Lesen der M-Bit Daten-Werte von dem ersten Speicher und zum Speichern der M-Bit Daten-Werte, welche erzeugt wurden von der Eingabe-Formatierungs-Vorrichtung, in dem zweiten Speicher; und
einer Steuervorrichtung, welche mit der Speichersteuervorrichtung, mit der ersten und zweiten Multiplex-Ausgabevorrichtung und mit der Eingabe-Formatierungs-Vorrichtung gekoppelt bzw. verschaltet ist zum Erzeugen der Steuersignale um zu veranlassen, dass ein zentraler Speicher einen M-Bit Wert abruft oder speichert und um zu veranlassen, dass der erste Speicher den abgerufenen Daten-Wert aufnimmt bzw. akzeptiert und um zu bewirken, dass der zweite Speicher den Daten-Wert zur Verfügung stellt, welcher gespeichert ist.

6. Speichersystem nach Anspruch 5, wobei:
der erste Speicher ein Puffer-Speicher ist, welcher mit dem zentralen Speicher gekoppelt ist zum Empfangen bzw. Aufnehmen von aufeinanderfolgenden M-Bit Werten, welche von dem zentralen Speicher zur Verfügung gestellt werden und zum Liefern der gespeicherten M-Bit Werte an das Ausgabe-Latch; und
die Speichersteuervorrichtung ist mit den ersten und zweiten Speichern gekoppelt und die Steuervorrichtung erzeugt Steuersignale, welche dynamisch die jeweiligen Daten verändern, bei welchen die M-Bit Werte bei dem ersten Speicher zur Verfügung gestellt werden für die erste und zweite Multiplex-Ausgabevorrichtung in Reaktion auf die jeweiligen Raten, bei welchen die ersten und zweiten Multiplex-Ausgabevorrichtungen die jeweiligen N-Bit Daten-Werte und P-Bit Daten-Werte zur Verfügung stellen.

## Revendications

1. Système de mémoire à largeur de bande élevée comportant :
une mémoire (112) qui conserve des données sous forme de valeurs de données à M bits, où M est un nombre entier,
une pluralité de verrous-multiplexeurs (210, 214, 216), chacun des verrous-multiplexeurs incluant :
un verrou (309, 310) qui accepte les valeurs de données à M bits fournies par la mémoire (112), et
un multiplexeur (312) qui effectue des séquences par l'intermédiaire des valeurs de données à M bits conservées par le verrou (310) pour fournir au moins N bits de données en même temps à un port de sortie, où N est un nombre entier inférieur à M,
dans lequel, la pluralité de verrous-multiplexeurs inclut des premiers verrous-multiplexeurs (309d à 309g, 310d à 310j, 312d à 312j) qui desservent des canaux à largeur de bande relativement faible et des seconds verrous-multiplexeurs (309, 310, 312a à 312c) qui desservent des canaux à largeur de bande relativement élevée, de sorte que les seconds verrous-multiplexeurs (309, 310, 312a à 312c) sont chargés avec les données provenant de la mémoire (112) plus fréquemment que les premiers verrous-multiplexeurs (309d à 309g, 310d à 310j, 312d à 312j).

2. Système de mémoire à largeur de bande élevée selon la revendication 1, dans laquel :
M est équitablement divisible par N, et
Les seconds verrous-multiplexeurs (309, 310, 312a à 312c) effectuent la séquence des valeurs de données à M bits conservées par leurs verrous respectifs pour fournir au moins les P bits de données en même temps à leurs ports de sortie respectifs, où P est un nombre entier inférieur à M et supérieur à N, de sorte que M est équitablement divisible par P, et
Le système de mémoire à largeur de bande élevée inclut en outre des moyens de séquencement (314), reliés à la mémoire et aux premiers et seconds verrous-multiplexeurs pour amener la mémoire centrale à fournir séquentiellement des données à chacun des premiers et seconds verrous-multiplexeurs à des vitesses respectives, la vitesse à laquelle les données sont fournies à l'un des seconds verrous-multiplexeurs étant supérieure à la vitesse à laquelle des données sont fournies à l'un quelconque des premiers verrous-multiplexeurs.

3. Système de mémoire à largeur de bande élevée selon la revendication 2, incluant en outre :
une borne pour recevoir des valeurs de données à R bits, où R est un nombre entier inférieur à M, où M est équitablement divisible par R,
des moyens de formatage pour combiner une séquence des valeurs à R bits reçues dans une valeur à M bits,
un verrou supplémentaire pour mémoriser la valeur à M bits produite par les moyens de formatage et pour fournir la valeur à M bits mémorisée à une mémoire supplémentaire, et
des moyens pour mémoriser la valeur à M bits conservée par le verrou supplémentaire dans la mémoire supplémentaire,
dans lequel les moyens de séquencement incluent des moyens pour amener la mémoire supplémentaire à mémoriser des données fournies par le verrou supplémentaire telles qu'elles sont fournies par les moyens de formatage pour être combinées.

4. Système de mémoire à largeur de bande élevée selon la revendication 3, dans lequel :
la mémoire est une première mémoire tampon reliée à une mémoire centrale pour conserver des valeurs à M bits successives fournies par la mémoire centrale et pour fournir les valeurs à M bits conservées, aux premiers et seconds verrous-multiplexeurs, et
dans lequel les moyens de séquencement sont reliés à la première mémoire et à la mémoire tampon pour dynamiquement changer les vitesses respectives auxquelles les valeurs à M bits sont fournies aux premiers et seconds verrous-multiplexeurs en réponse aux vitesses respectives auxquelles les valeurs à M bits sont consommées par les canaux à largeur de bande faible et à largeur de bande élevée respectifs.

5. Système de mémoire comportant :
une première et une seconde mémoire (112, 204), dont chacune conserve des données sous forme de valeurs de données à M bits, où M est un nombre entier,
un verrou de sortie (310), relié pour recevoir des valeurs de données à M bits en provenance de la première mémoire pour mémoriser les valeurs de données à M bits,
des premiers moyens de multiplexage de sortie (312d à 312j), reliés au verrou de sortie pour fournir les données des valeurs de données à M bits sous forme d'une séquence de valeurs de données à N bits, où N est un nombre entier inférieur à M,
des seconds moyens de multiplexage de sortie (312d à 312j), reliés au verrou de sortie pour fournir les données des valeurs de données à M bits sous forme d'une séquence de valeurs de données à P bits, où P est un nombre entier inférieur à M,
des moyens de formatage d'entrée, reliés pour recevoir des valeurs de données à Q bits et des valeurs de données à R bits respectives, où Q et R sont des nombres entiers inférieurs à M, et sensibles à un signal de commande pour sélectivement combiner des valeurs parmi les valeurs de données à Q bits afin de générer une valeur de données à M bits ou pour combiner des valeurs parmi les valeurs de données à R bits afin de générer une valeur de données à M bits,
des moyens de commande de mémoire, reliés à la première mémoire, pour lire les valeurs de données à M bits dans la première mémoire et pour mémoriser les valeurs de données à M bits générées par les moyens de formatage d'entrée dans la seconde mémoire, et
des moyens de commande, reliés aux moyens de commande de mémoire, aux premiers et aux seconds moyens de multiplexage de sortie et aux moyens de formatage d'entrée pour générer les signaux de commande destinés à amener une mémoire centrale à récupérer ou à mémoriser une valeur à M bits et à amener la première mémoire à accepter la valeur de données récupérée et à amener la seconde mémoire à fournir la valeur de données qui est mémorisée.

6. Système de mémoire selon la revendication 5, dans lequel :
la première mémoire est une mémoire tampon reliée à la mémoire centrale pour recevoir des valeurs à M bits successives fournies par la mémoire centrale et pour fournir les valeurs à M bits conservées au verrou de sortie, et
les moyens de commande de mémoire sont reliés à la première et à la seconde mémoire et les moyens de commande génèrent des signaux de commande qui changent dynamiquement les vitesses respectives auxquelles les valeurs à M bits sont fournies par la première mémoire aux premiers et seconds moyens de multiplexage de sortie en réponse aux vitesses respectives auxquelles les premiers et seconds moyens de multiplexage de sortie fournissent les valeurs de données à N bits et les valeurs de données à P bits respectives.
